# EUROPÄISCHE PATENTANMELDUNG

(11) **EP 4 604 082 A1**
(43) Veröffentlichungstag der Anmeldung: **20.08.2025**
(21) Anmeldenummer: 24157721.2
(22) Anmeldetag: 15.02.2024
(51) Int. Cl.: G06V 20/58, B66F 9/075, G01S 17/88, G06V 20/64, G06V 30/19

(54) **VERFAHREN ZUM ERFASSEN EINER POSITION UND ORIENTIERUNG EINES VORBESTIMMTEN GEGENSTANDS IN EINER UMGEBUNG EINES FLURFÖRDERZEUGS**

(71) Anmelder: Jungheinrich AG, 22047 Hamburg (DE)
(72) Erfinder: ULEWICZ, Sebastian, 85748 Garching b. München (DE); VAN KROGH, Marco, 80997 München (DE); FELD, Mario, 84034 Landshut (DE)
(74) Vertreter: Weickmann & Weickmann PartmbB

(57) **Zusammenfassung**

Die vorliegende Erfindung betrifft ein Verfahren zum Erfassen einer Position und Orientierung eines vorbestimmten Gegenstands (P), beispielsweise einer Palette oder eines anderen Ladungsträgers, in einer Umgebung eines Flurförderzeugs, welches wenigstens eine 2D-Bildaufnahmevorrichtung umfasst, umfassend die Schritte eines Definierens eines Metamodells des vorbestimmten Gegenstands, umfassend eine Mehrzahl von charakteristischen Strukturen, wobei jede der charakteristischen Strukturen einen Höhenbereich (A, B, C) des Gegenstands (P), eines Erfassens der Umgebung mittels der wenigstens einen Bildaufnahmevorrichtung, eines Erstellens einer Punktewolke, welche in der Umgebung erfasste Objekte repräsentiert, eines Durchsuchens der Punktewolke nach den charakteristischen Strukturen des Metamodells, und bei einem Auffinden einer der charakteristischen Strukturen in der Punktewolke, eines Ableitens einer tatsächlichen Position und Orientierung des vorbestimmten Gegenstands. Ferner betrifft die Erfindung ein Verfahren zum Durchführen einer Anfahrt zu eines aufzunehmenden vorbestimmten Gegenstands durch ein Flurförderzeug und ein Flurförderzeug, welches dazu eingerichtet ist, ein erfindungsgemäßes Verfahren durchzuführen.

## Beschreibung

Die vorliegende Erfindung betrifft ein Verfahren zum Erfassen einer Position und Orientierung eines vorbestimmten Gegenstands, beispielsweise einer Palette oder eines anderen Ladungsträgers, in einer Umgebung eines Flurförderzeugs, welches eine 2D-Bildaufnahmevorrichtung umfasst, ein Verfahren zum Durchführen einer Anfahrt zu einem aufzunehmenden Gegenstand, sowie ein Flurförderzeug, welches dazu eingerichtet ist, ein derartiges Verfahren durchzuführen.

Im Bereich der Flurförderzeuge und insbesondere der autonomen Flurförderzeuge sind Vorgänge zum Aufnehmen und Abgeben von Lasten ein essenzieller Bestandteil ihres regulären Betriebs. Hierbei ist es insbesondere in autonomen oder halbautonomen Fahrzeugen, in welchen kein menschlicher Bediener die entsprechenden Betriebsabläufe steuert, notwendig, zu handhabende Gegenstände und insbesondere Paletten oder andere Ladungsträger in der Umgebung des Flurförderzeuges zu identifizieren und ihre Positionen sowie Orientierungen mit hoher Präzision zu bestimmen.

Zu diesem Zweck sind aus dem Stand der Technik unterschiedliche Ansätze bekannt, um beispielsweise Paletten oder andere Ladungsträger mithilfe eines Laserscanners in der Umgebung eines Flurförderzeuges zu erkennen und ihre Position und Orientierung auszuwerten. Beispielhaft sei hier auf die US 9715232 B1 und die US 10007266 B1 verwiesen, welche jeweils generalisierte Modelle zur Beschreibung von Ladehilfsmitteln verwenden, um auf dieser Grundlage einen Abgleich mit durch entsprechende Laserscanner aufgenommenen Bildern der Umgebung hinsichtlich eines Vorliegens eines derartigen Gegenstands durchführen zu können. Hierbei sind die entsprechenden Laserscanner an dem Fahrzeugkörper des jeweiligen Flurförderzeugs angebracht und tasten die Umgebung des Fahrzeugs in einer vorbestimmten Höhe im Bereich einer Scanebene ab.

In derartigen Verfahren aus dem Stand der Technik zeigt sich jedoch, dass diese häufig nicht ausreichend robust gegenüber unerwünschten Variationen in einer Positionierung der entsprechenden Sensoreinheiten sind und insbesondere in Fällen, in welchen hiervon aufgespannte Sensorebenen hinsichtlich ihrer Höhe über dem Untergrund Abweichungen aufweisen, falsch positive oder falsch negative Ergebnisse liefern, welche die Betriebseffizienz der entsprechenden Flurförderzeuge deutlich verringern.

Es ist demzufolge die Aufgabe der vorliegenden Erfindung, ein verbessertes Verfahren zum Erfassen einer Position und Orientierung eines vorbestimmten Gegenstands und insbesondere einer Palette oder eines anderen Ladungsträgers in einer Umgebung eines Flurförderzeugs bereitzustellen, welches wenigstens eine 2D-Bildaufnahmevorrichtung umfasst. Zur Lösung dieser Aufgabe und zur Behebung der oben genannten Nachteile des zitierten Stands der Technik umfasst das erfindungsgemäße Verfahren die Schritte eines Definierens eines Metamodells des vorbestimmten Gegenstands, umfassend eine Mehrzahl von charakteristischen Strukturen, wobei jede der charakteristischen Strukturen einen Höhenbereich des Objekts repräsentiert, eines Erfassens der Umgebung mittels der Bildaufnahmevorrichtung, eines Erstellens einer Punktewolke, welche in der Umgebung erfasste Objekte repräsentiert, eines Durchsuchens der Punktewolke nach den charakteristischen Strukturen des Metamodells und bei einem Auffinden einer der charakteristischen Strukturen in der Punktewolke, eines Ableitens einer tatsächlichen Position und Orientierung des vorbestimmten Gegenstands.

Indem demzufolge in der vorliegenden Erfindung in dem zugrunde gelegten Metamodell eine Mehrzahl von jeweiligen Höhenbereiche des Gegenstands repräsentierende charakteristische Strukturen enthalten sind, ist das erfindungsgemäße Verfahren gegenüber aus dem Stand der Technik bekannten Verfahren wesentlich robuster hinsichtlich einer Variation in der Höhe der Erfassungsebene der verwendeten wenigstens einen 2D-Bildaufnahmevorrichtung. Hierbei wird jedoch weiterhin davon ausgegangen, dass die entsprechende Erfassungsebene parallel zu einem Fahruntergrund ist und dementsprechend Roll- und Nickwinkel vernachlässigt und als Null angenommen werden können.

In diesem Zusammenhang sind die charakteristischen Strukturen des einzusetzenden Metamodells derart zu verstehen, dass sie das Vorliegen von Material an einem Unterbereich des vorbestimmten Gegenstands nachbilden, beispielsweise im Fall einer Palette die einzelnen die Palette bildenden Bretter und Klötze. Derartige Strukturen werden im Fachjargon auch häufig als "Pattern" bezeichnet und in einer einfachen Veranschaulichung kann der entsprechende Gegenstand virtuell dadurch nachgebildet werden, dass die einzelnen charakteristischen Strukturen gestapelt werden, sofern zunächst einmal davon ausgegangen wird, dass jeder Höhenbereich des Gegenstands lediglich durch eine einzelne der charakteristischen Strukturen in einem vorliegenden Metamodell repräsentiert ist. Hierbei umfassen die Pattern dementsprechend auch Größeninformationen der einzelnen nachzubildenden Merkmale des entsprechenden Gegenstands, wobei durch die Aufnahme einer zweidimensionalen Punktewolke, welche entsprechend Abstandsinformationen zu detektierten Objekten enthält, ein Bezug zu Ausmaßen der Objekte hergestellt werden kann.

Hierbei beruht das erfindungsgemäße Verfahren darauf, dass vor Beginn der Erfassung der Umgebung mittels der Bildaufnahmevorrichtung das entsprechende Metamodell zunächst einmalig definiert wird, beispielsweise vor einer Inbetriebnahme des entsprechenden Flurförderzeugs, und in einer Speichereinheit hinterlegt wird, auf welche eine Steuereinheit des Fahrzeugs im laufenden Betrieb zugreifen kann. Hierbei es selbstverständlich auch denkbar, während des Betriebs des Fahrzeugs neue oder geänderte Metamodelle zur Verfügung zu stellen, ggf. mittels einer drahtlosen Datenverbindung, über welche das Flurförderzeug beispielsweise auch Fahraufträge und Ähnliches von einer zentralen Leitstelle erhalten kann. Weiterhin ist festzuhalten, dass das angesprochene Metamodell jeweils einem Typ von Gegenstand entspricht, also beispielsweise einem konkreten Palettentyp, welcher in einer Lagerumgebung auch mehrmals vorkommen kann, wie dies im praktischen Betrieb derartiger Fahrzeuge üblich ist.

Weiterhin soll festgehalten sein, dass die angesprochene Punktewolke als ein Datenobjekt zu verstehen ist, welches in der Steuerung des Flurförderzeugs erstellt und ausgewertet wird, welches für die Durchführung der entsprechenden Verfahrensschritte zuständig ist. Hierbei ist eine derartige Punktewolke als eine zweidimensionale Karte aufzufassen, in welcher von der 2D-Bildaufnahmevorrichtung erfasste Objekte als Punkte eingetragen sind und dementsprechend ein charakteristisches Muster bilden, welches die Umgebung des Fahrzeugs und die darin enthaltenen Gegenstände repräsentiert.

Des Weiteren soll ebenfalls an dieser Stelle festgehalten werden, dass die Kombination einer Position und einer Orientierung eines Gegenstands häufig als dessen "Pose" bezeichnet wird und beispielsweise bei einer Anfahrt eines aufzunehmenden Gegenstands von einem Flurförderzeug ein entscheidender Betriebsparameter ist, um nicht nur den Aufenthaltsort des aufzunehmenden Gegenstands zu beschreiben, sondern beispielsweise im Fall einer aufzunehmenden Palette auch ihre Orientierung bezüglich eines beliebigen Koordinatensystems. Dies ist insbesondere notwendig, da für eine korrekte Anfahrt und Aufnahme einer Palette die Ausrichtung ihrer Taschen bekannt sein muss, in welche ein Lastaufnahmemittel das Flurförderzeugs einzuführen ist, um die Palette aufzunehmen.

Wenngleich es prinzipiell denkbar ist, in der oben bereits kurz angesprochenen Weise für jeden Höhenbereich des vorbestimmten Gegenstands in einem entsprechenden Metamodell lediglich eine einzelne charakteristische Struktur zu verwenden, so können in einer Weiterbildung der Erfindung die charakteristischen Strukturen des vorbestimmten Gegenstands in dem Metamodell mehrere charakteristische Strukturen eines einzelnen Höhenbereichs umfassen, welche insbesondere unterschiedliche Betrachtungswinkel des Gegenstands und/oder fehlende Merkmale des Gegenstands im Rahmen erwartbarer Beschädigungen repräsentieren können.

Dementsprechend würde in einem derartigen Fall die Anzahl der charakteristischen Strukturen zum Aufbau eines Metamodells eines vorbestimmten Gegenstands von der Anzahl der zu beschreibenden Ebenen und abzudeckenden Blickwinkel abhängen, die unterschieden werden sollen, ggf. unter Hinzuziehung zusätzlicher charakteristischer Strukturen für ein Berücksichtigen möglicher definierter Beschädigungen des entsprechenden Gegenstands. Ein Beispiel hierfür könnte ein Metamodell der standardisierten Europalette sein, welche mittels wenigstens vier derartigen charakteristischen Strukturen in einem Metamodell abgebildet werden könnte, welche drei Höhenbereiche repräsentieren, von welchen wiederum wenigstens einer für unterschiedliche Betrachtungswinkel unterschiedliche charakteristische Strukturen zur Beschreibung benötigt. In ähnlicher Weise könnten zusätzliche charakteristischen Strukturen in einem Metamodell aufgenommen sein, welche üblicherweise zu erwartende Beschädigungen entsprechender Gegenstände repräsentieren können, beispielsweise im Falle von Paletten häufig auftretende Beschädigungen, wie beispielsweise fehlende einzelne Klötze, die in entsprechenden charakteristischen Strukturen dann ausgelassen werden würden.

In jedem Fall könnten die charakteristischen Strukturen als Datenobjekte üblicherweise Linien und Zentroide umfassen, wobei der Begriff des "Zentroids" im Gegensatz zu einer eindimensionalen Linie, welche beispielsweise in einer Palette ein Brett nachbilden kann, als eine definierte zweidimensionale Ansammlung oder lokale Anhäufung von Punkten zu verstehen ist, welche beispielsweise Klötze von Paletten abbilden kann.

Weiterhin könnten die charakteristischen Strukturen derartiger Metamodelle zulässige Toleranzen definieren, mittels welchen erlaubte Abweichungen von festen Vorgaben eingeführt werden können. Hierbei können sich diese erlaubten Abweichungen ebenfalls auf die bereits angesprochenen Linien und Zentroide beziehen und beispielsweise prozentual ausgedrückt sein, so dass Toleranzbereiche um vorgegebene Werte herum etabliert werden, innerhalb derer eine Erkennung eines entsprechenden Gegenstands über die jeweilige charakteristische Struktur des entsprechende Metamodell festgestellt werden wird.

Alternativ oder zusätzlich könnten die charakteristischen Strukturen ferner Ausschlussbereiche definieren, in welchen sich um entsprechende erfasste Objekte herum keine weiteren erfassten Objekte befinden dürften, wobei ansonsten bei einem Erfassen dieser zusätzlichen Objekte kein Gegenstand als aufgefunden angenommen wird. Dementsprechend geben derartige Ausschlussbereiche Räume um Gegenstände vor, welche nicht von anderen Gegenständen besetzt sein dürfen, da ansonsten kein Gegenstand als aufgefunden angenommen wird. Durch diese Maßnahme wird ein zusätzlicher Mechanismus geschaffen, um falsch positive Erkennungen von vorbestimmten Gegenständen auszuschließen, da beispielsweise Wände in der Umgebung des Fahrzeugs fälschlicherweise als Liniensegmente einer Palette identifiziert werden könnten. Indem nun Ausschlussbereiche um entsprechende Linien eines Metamodells mit vorgegebener Länge definiert werden, kann sichergestellt werden, dass derartige fehlerhafte Erkennungen vermieden werden.

Weiterhin kann das erfindungsgemäße Verfahren ein Definieren von Metamodellen einer Mehrzahl von Gegenständen umfassen, welche beispielsweise unterschiedliche Palettentypen oder allgemein gesprochen unterschiedliche vorbestimmte Typen von Gegenständen repräsentieren können, welche im regulären Betrieb des entsprechenden Flurförderzeugs in dessen Umgebung erwartet werden und in entsprechenden Arbeitsaufträgen enthalten sein können.

Um den Verarbeitungsaufwand des erfindungsgemäßen Verfahrens zu minimieren, kann ferner den charakteristischen Strukturen eines entsprechenden Metamodells eine Priorisierungsreihenfolge zugewiesen werden, wobei dementsprechend das Durchsuchen der Punktewolke nach den charakteristischen Strukturen des Metamodells gemäß dieser Priorisierungsreihenfolge durchgeführt werden kann. Hierbei können charakteristische Strukturen höher priorisiert werden, die beispielsweise in einem Höhenbereich des Gegenstands liegen, in welchem die Scanebene der wenigstens einen 2D-Bildaufnahmevorrichtung zunächst einmal erwartet wird, während charakteristische Strukturen in abweichenden Höhenbereichen mit einer niedrigeren Priorisierung erst anschließend gesucht werden können, wenn die priorisierten Strukturen in einer entsprechenden Punktewolke zunächst einmal nicht aufgefunden werden.

Weiterhin kann das Durchsuchen der Punktewolke nach den charakteristischen Strukturen des Metamodells ein Unterteilen der Punktewolke in eine Mehrzahl von Clustern umfassen, beispielsweise anhand vorgegebener Abstandskriterien, wobei dementsprechend isolierte Bereiche der Punktewolke, in welchen gehäuft Objekte detektiert werden, als einzelne Cluster behandelt und nach charakteristischen Strukturen durchsucht werden würden.

Weiterhin soll festgehalten sein, dass für das Auffinden der charakteristischen Strukturen in der Punktewolke und/oder das Ableiten der tatsächlichen Position und Orientierung des vorbestimmten Gegenstands eine Mehrzahl von zu unterschiedlichen Zeiten erfassten Punktewolken betrachtet werden können. Dementsprechend kann durch eine Aufnahme und Untersuchung mehrerer zeitlich beabstandeter Punktewolken während einer Bewegung des Flurförderzeugs eine Plausibilisierung von erfassten Gegenständen und ihrer Posen sowie eine Erhöhung der Konfidenz der Messungen und eine Verbesserung ihrer Präzision erzielt werden.

Gemäß einem weiteren Aspekt betrifft die vorliegende Erfindung ein Verfahren zum Durchführen einer Anfahrt eines aufzunehmenden vorbestimmten Gegenstands durch ein Flurförderzeug, umfassend ein Definieren einer erwarteten Position und Orientierung des Gegenstands, ein Anfahren an die erwartete Position des Gegenstands gemäß einer vorbestimmten Bahnkurve und ein Durchführen eines Verfahrens zum Erfassen einer Position und Orientierung des vorbestimmten Gegenstands der oben beschriebenen erfindungsgemäßen Art, wobei das Erfassen der Umgebung des Flurförderzeugs, das Erstellen der Punktewolke, das Durchsuchen der Punktewolke nach den charakteristischen Strukturen des Metamodells und das Ableiten der tatsächlichen Position und der Orientierung des vorbestimmten Gegenstands während des Befahrens der vorbestimmten Bahnkurve durchgeführt werden, wobei bei einem erfolgten Ableiten der tatsächlichen Position und Orientierung die weitere Anfahrt zu dem Gegenstand auf Grundlage der tatsächlichen Position und Orientierung durchgeführt wird.

Demzufolge dient in dem erfindungsgemäßen Verfahren zum Durchführen einer Anfahrt an einen Gegenstand das Erfassen der Position und Orientierung des Gegenstands einer Verbesserung der zum Erreichen des Gegenstands zu befahrenen Bahnkurve, ausgehend von einer zunächst einmal angenommenen und dem Flurförderzeug ursprünglich bekannten erwarteten Position und Orientierung davon, welche beispielsweise im Rahmen eines Betriebsauftrags von einer zentralen Leitstelle an das Fahrzeug übermittelt werden kann.

Hierbei kann eine iterative Erfassung der tatsächlichen Position und Orientierung des aufzunehmenden Gegenstands während der weiteren Anfahrt und gegebenenfalls eine entsprechende weitere Anpassung der im Rahmen der weiteren Anfahrt zu befahrenden Bahnkurve durchgeführt werden, da davon auszugehen ist, dass bei einer weiteren Annäherung an den aufzunehmenden Gegenstand die Erfassung von dessen Position und Orientierung hinsichtlich ihrer Präzision und Zuverlässigkeit weiter verbessert werden wird.

Weiterhin kann das Durchsuchen der Punktewolke nach den charakteristischen Strukturen des Metamodells und das Ableiten der tatsächlichen Position und der Orientierung des vorbestimmten Gegenstands während des Anfahrens an die erwartete Position erst dann begonnen werden, wenn ein bestimmter Abstand zu der erwarteten Position unterschritten wird. Das heißt, dass zunächst einmal eine Anfahrt der erwarteten Position bis zu einem vorbestimmten Abstand durchgeführt wird, bevor das Verfahren zum Erfassen der tatsächlichen Position und Orientierung begonnen wird. Dementsprechend wird dieses Verfahren lediglich bei der unmittelbaren Annäherung bzw. zeitlich kurz vor der Aufnahme des entsprechenden Gegenstands durchgeführt, wenn davon auszugehen ist, dass dieser bereits mit einer ausreichenden Präzision von der Bildaufnahmevorrichtung erfassbar und die erhaltenen Daten in der gewünschten Weise auswertbar sind.

Gemäß einem weiteren Aspekt betrifft die vorliegende Erfindung ein Flurförderzeug, umfassend wenigstens eine 2D-Bildaufnahmevorrichtung und eine mit der Bildaufnahmevorrichtung betriebsmäßig gekoppelte Steuereinheit mit einer zugeordneten Speichereinheit, wobei die Bildaufnahmevorrichtung und die Steuereinheit dazu eingerichtet sind, gemeinschaftlich ein Verfahren der oben beschriebenen Weise durchzuführen. Hierbei kann das entsprechende erfindungsgemäße Flurförderzeug vorzugsweise autonom oder halbautonom beschreibbar sein und die von der Steuereinheit durchzuführenden Verfahrensschritte umfassen das bereits beschriebene Ablegen eines definierten Metamodells in der Speichereinheit zusammen mit geeigneten Algorithmen zur Auswertung von durch die Bildaufnahmevorrichtung aufgenommenen Daten über in der Umgebung des Fahrzeugs vorliegenden Objekte.

Hierbei kann insbesondere die Bildaufnahmevorrichtung des erfindungsgemäßen Flurförderzeugs durch einen 2D-Lidar-Sensor gebildet sein, wobei beispielsweise insbesondere zwei derartige Lidar-Sensoren vorgesehen sein können, welche gemeinsam die vollständigen 360° um das Fahrzeug herum abdecken und deren gelieferte Daten im Rahmen eines sogenannten "Sensorfusion-Verfahrens" miteinander kombiniert werden.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: eine schematische Ansicht eines erfindungsgemäßen Flurförderzeugs und einer in der Umgebung davon vorliegenden Palette in einer Draufsicht;
- Figur 2: eine schematische Draufsicht auf das Flurförderzeug und die Palette aus Figur 1 im Rahmen einer erfassten Punktewolke;
- Figur 3: einen Teil der Punktewolke der Palette aus Figur 2 in einer Detailansicht;
- Figur 4: charakteristische Strukturen eines Metamodells eines Palettentyps; und
- Figur 5: ein Flussdiagramm zur Verdeutlichung eines erfindungsgemäßen Verfahrens.

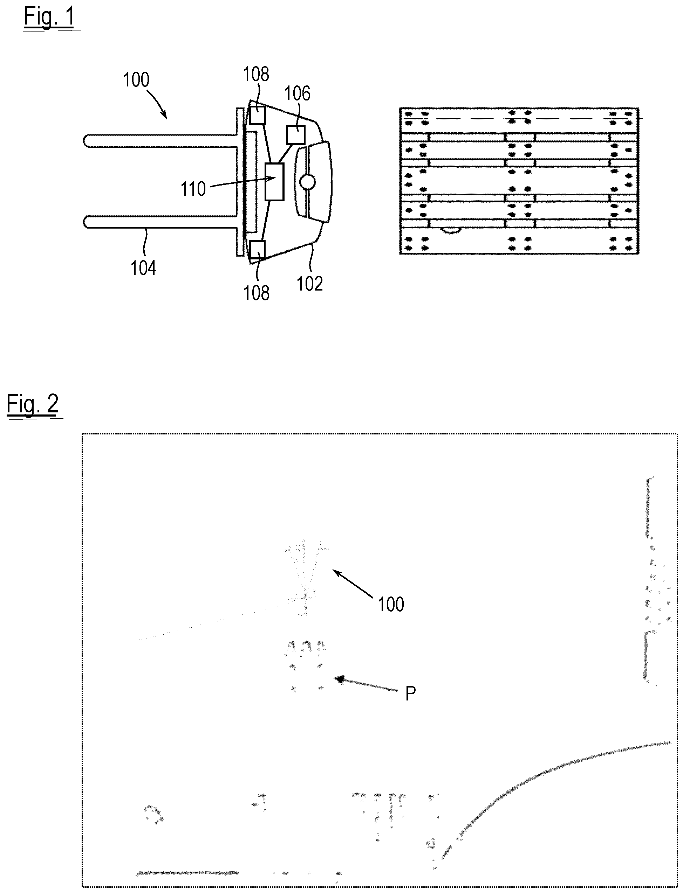

In Figur 1 ist zunächst einmal ein erfindungsgemäßes Flurförderzeug 100 zusammen mit einer Palette P in Draufsicht gezeigt, wobei das Flurförderzeug 100 zum Durchführen des weiter unten beschriebenen erfindungsgemäßen Verfahrens innerhalb einer Logistikeinrichtung eingerichtet und vorgesehen ist. Hierbei ist das Flurförderzeug 100 als autonomes Flurförderzeug mit einem Fahrzeugkörper 102 und einem hieran höhenverlagerbar angeordneten Lastaufnahmemittel 104 in Form einer Gabel sowie wenigstens drei in den Figuren nicht zu sehenden Rädern gebildet, mittels welcher sich das Flurförderzeug 100 in einer angetriebenen und gelenkten Weise auf dem Untergrund bewegen kann.

Das Flurförderzeug 100 steht insbesondere mittels einer lediglich schematisch angedeuteten Kommunikationsvorrichtung 106 in Kommunikationsverbindung mit einer Leitstelle, von welcher Betriebsaufträge an das Flurförderzeug 100 übermittelt werden, welche im hier diskutierten Beispiel insbesondere das Aufnehmen oder Abgeben einer Last in Form der Palette P einer bekannten Bauart betreffen.

Weiterhin umfasst das Flurförderzeug 100 insgesamt zwei 2D-Lidar-Sensoren 108, die derart in dem Fahrzeugkörper 102 montiert sind, dass sie im Wesentlichen eine Rundumsicht von vollen 360° ermöglichen. Mit der Kommunikationsvorrichtung 106 und den Lidar-Sensoren 108 gekoppelt umfasst das Flurförderzeug 100 ferner eine Steuereinheit 110, welche in Figur 1 ebenfalls lediglich schematisch dargestellt ist und beispielsweise in Form eines an sich bekannten Mikrocomputers mit einem zugeordneten Speicher ausgebildet sein kann. Ferner kann das Flurförderzeug weitere integrierte elektronische Komponenten umfassen, wie beispielsweise für eine Positionsbestimmung, mittels welcher das Fahrzeug 100 die eigene Position in der Logistikumgebung bestimmen kann.

Mittels der beiden Lidar-Sensoren 108 kann nun die Figur 2 gezeigte Punktewolke erstellt werden, in welcher zur Veranschaulichung das Fahrzeug 100 selbst ebenfalls eingezeichnet ist. Hierbei sind in der Punktewolke die entsprechend erfassten Umrisse der Palette P sowie weitere in einem größeren Abstand zu dem Fahrzeug 100 erfasste Objekte zu erkennen, wobei die entsprechende Punktewolke mittels eines Sensorfusion-Verfahrens aus den von den beiden Lidar-Sensoren 108 gelieferten Daten erstellt worden ist.

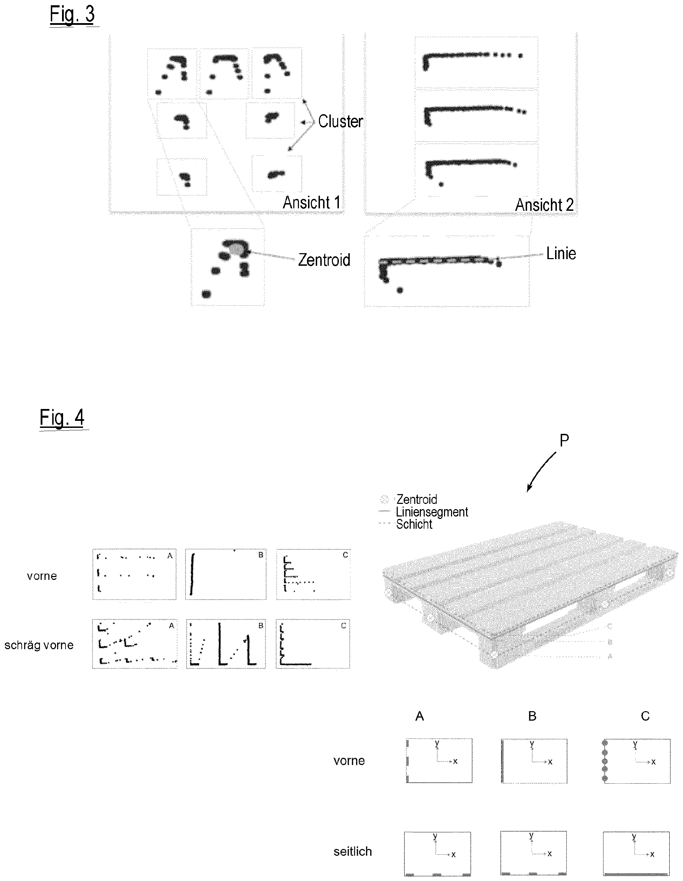

Anhand der linken Seite von Figur 3 ist nun ferner zu erkennen, wie die in Figur 2 dargestellte Punktewolke der Palette P mittels Abstandskriterien in eine Mehrzahl von einzelnen Clustern unterteilt worden ist, welche in einem erfindungsgemäßen Verfahren nach charakteristischen Strukturen eines Metamodells eines vorbestimmten Gegenstands untersucht werden können. Hierbei umfassen die einzelnen Cluster Liniensegmente und Zentroide, welche charakteristisch für Gegenstände in der Umgebung des Flurförderzeugs 100 sind und demzufolge mit dem angesprochenen Metamodell abgeglichen werden können.

Neben der bereits aus Figur 2 bekannten Punktewolke auf der linken Seite umfasst Figur 3 ferner auf der rechten Seite eine weitere Punktewolke, welche einer Ansicht der Palette P aus einem anderen Winkel entspricht, in welcher die einzelnen Abschnitte der Palette als Liniensegmente erfasst werden, demzufolge entsprechend einem Betrachtungswinkel der Palette P, welcher der Längsseite davon entspricht, im Gegensatz zu einer Betrachtung der schmalen Seite der Palette P in der linken Ansicht aus Figur 3.

Unter Bezugnahme auf Figur 4 ist nunmehr ein Metamodell einer derartigen Palette P erläutert, wozu zu diesem Zweck eine Mehrzahl von charakteristischen Strukturen definiert sind, welche jeweils einem Höhenbereich der Palette P entsprechen, wobei die entsprechenden Höhenbereiche in diesem Fall mit A, B und C bezeichnet worden sind. Da die entsprechenden Höhenbereiche A bis B der Palette unter unterschiedlichen Betrachtungswinkeln, also insbesondere bei einer Draufsicht auf die lange Seite bzw. die kurze Seite der Palette P, teilweise unterschiedliche erwartete Punktewolken mit sich bringen, sind mehrere charakteristische Strukturen definiert, die im vorliegenden Fall mit Pattern 1 bis Pattern 4 bezeichnet sind.

Anhand der unten links dargestellten Punktewolken lässt sich nunmehr aus Figur 4 nachvollziehen, wie die einzelnen Zentroide und Linien bei einer Erfassung einer derartigen Palette erwartet werden, so dass bei einem Abgleich mit den Pattern 1 bis 4 jeweils die charakteristischen Strukturen in der Punktewolke aufgefunden werden können und somit eine tatsächliche Position und Orientierung der Palette P als vorbestimmtem Gegenstand abgeleitet werden können. Hierbei wird gemäß den in den von den Lidar-Sensoren gelierten 2D-lnformationen auf Grundlage des Abstands zu den erfassten Objekten jeweils eine Größenskalierung vorgenommen, um einen Bezug zu den in dem Metamodell kodierten Abmessungen des entsprechenden Gegenstands herzustellen.

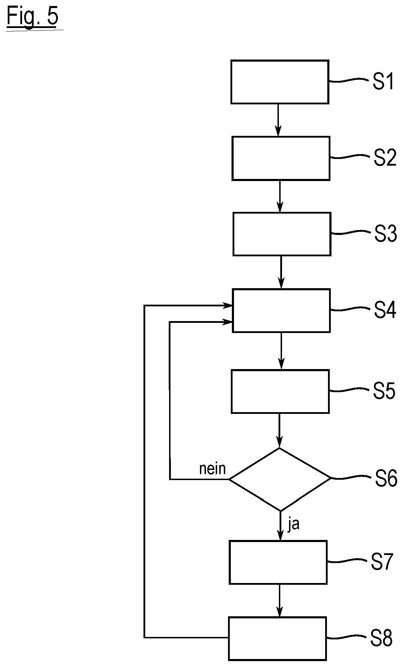

Zuletzt ist in Figur 5 ein Flussdiagramm eines erfindungsgemäßen Verfahrens zum Durchführen einer Anfahrt eines aufzunehmenden vorbestimmten Gegenstands durch ein Flurförderzeug dargestellt, welches wiederum ein Verfahren zum Erfassen einer Position und Orientierung eines vorbestimmten Gegenstands umfasst, also beispielsweise der mehrfach erwähnten Palette P.

Hierbei wird zunächst in einem Schritt S1 vor Inbetriebnahme des Flurförderzeugs ein Metamodell des vorbestimmten Gegenstands definiert, welches eine Mehrzahl von charakteristischen Strukturen umfasst, von welchen jede einen Höhenbereich des entsprechenden Gegenstands repräsentiert, wobei als Beispiel hierfür auf die Darstellung aus Figur 4 verwiesen sein soll.

Anschließend wird der Betrieb des Flurförderzeugs gestartet und eine erwartete Position und Orientierung des Gegenstands in der Betriebsumgebung des Flurförderzeugs in Schritt S2 definiert, beispielsweise indem eine entsprechende erwartete Position und Orientierung von einer zentralen Leitstelle an das Flurförderzeug im Rahmen eines Betriebsauftrags übermittelt wird. Auf Grundlage dieser erwarteten Position und Orientierung nimmt nun in Schritt S3 das Flurförderzeug eine Anfahrt an die erwartete Position des Gegenstands gemäß einer vorbestimmten Bahnkurve vor, welche beispielsweise anhand geeigneter Algorithmen aus der bekannten momentanen Position des Flurförderzeugs, der erwarteten Position des Gegenstands sowie weiterer Daten hinsichtlich in der Betriebsumgebung vorliegender weiterer Gegenstände, Hindernisse und ähnlichem erstellt wird.

Anschließend wird bei einem Unterschreiten eines vorbestimmten Abstands des Flurförderzeugs zu der erwarteten Position in Schritt S4 eine Erfassung der Umgebung des Flurförderzeugs mittels der Bildaufnahmevorrichtung begonnen, um hieraus die Position und Orientierung des vorbestimmten Gegenstands ableiten zu können. Diese Erfassung kann insbesondere periodisch durchgeführt werden, beispielsweise mit einer Frequenz von etwa 20 Hz. Hierbei wird in Schritt S5 jeweils aus den Erfassungsergebnissen der Bildaufnahmevorrichtung eine Punktewolke erstellt, welche in der Umgebung des Flurförderzeugs erfasste Objekte repräsentiert, wobei für ein Beispiel hierfür auf Figur 2 verwiesen sein soll.

Abschließend wird in Schritt S6 die Punktewolke in der anhand von Figur 3 und Figur 4 beschriebenen Weise nach charakteristischen Strukturen des Metamodells durchsucht und wenn entsprechende charakteristische Strukturen in der Punktewolke aufgefunden werden ("ja" in Schritt S6), wird bei Schritt S7 eine tatsächliche Position und Orientierung des vorbestimmten Gegenstands abgeleitet. Anschließend kann in Schritt S8 die weitere Anfahrt zu dem Gegenstand auf Grundlage der ermittelten tatsächlichen Position und Orientierung durchgeführt werden, das heißt, die zu befahrende Bahnkurve kann entsprechend dieser neuen tatsächlichen Pose des anzufahrenden Gegenstands angepasst werden.

Anschließend geht das Verfahren erneut zu Schritt S4 über, sowohl wenn der bestimmte Gegenstand in der Punktewolke aufgefunden wurde, als auch wenn dies nicht der Fall ist ("nein" in Schritt S6), so dass in jedem Fall die Erfassung der Umgebung mittels der Bildaufnahmevorrichtung weiterhin bei der vorbestimmten Frequenz durchgeführt wird, bis die Anfahrt der tatsächlichen Position des Gegenstands abgeschlossen worden ist.

## Patentansprüche

1. Verfahren zum Erfassen einer Position und Orientierung eines vorbestimmten Gegenstands (P), beispielsweise einer Palette oder eines anderen Ladungsträgers, in einer Umgebung eines Flurförderzeugs (100), welches wenigstens eine 2D-Bildaufnahmevorrichtung (108) umfasst, umfassend die Schritte:
- Definieren eines Metamodells des vorbestimmten Gegenstands (P), umfassend eine Mehrzahl von charakteristischen Strukturen, wobei jede der charakteristischen Strukturen einen Höhenbereich (A, B, C) des Gegenstands (P) repräsentiert (S1);
- Erfassen der Umgebung mittels der wenigstens einen Bildaufnahmevorrichtung (108) (S4);
- Erstellen einer Punktewolke, welche in der Umgebung erfasste Objekte repräsentiert (S5);
- Durchsuchen der Punktewolke nach den charakteristischen Strukturen des Metamodells (S6); und
- bei einem Auffinden einer der charakteristischen Strukturen in der Punktewolke, Ableiten einer tatsächlichen Position und Orientierung des vorbestimmten Gegenstands (S7).

2. Verfahren nach Anspruch 1,
wobei die charakteristischen Strukturen des vorbestimmten Gegenstands (P) mehrere charakteristische Strukturen eines einzelnen Höhenbereichs (A, B, C) umfassen, welche insbesondere unterschiedliche Betrachtungswinkel des Gegenstands (P) und/oder fehlende Merkmale des Gegenstands (P) im Rahmen erwartbarer Beschädigungen repräsentieren.

3. Verfahren nach Anspruch 1 oder Anspruch 2,
wobei die charakteristischen Strukturen als Datenobjekte Linien und Zentroide umfassen.

4. Verfahren nach einem der vorhergehenden Ansprüche,
wobei die charakteristischen Strukturen ferner zulässige Toleranzen definieren.

5. Verfahren nach einem der vorhergehenden Ansprüche,
wobei die charakteristischen Strukturen ferner Ausschlussbereiche definieren, in welchen sich keine erfassten Objekte befinden dürfen.

6. Verfahren nach einem der vorhergehenden Ansprüche,
umfassend ein Definieren von Metamodellen einer Mehrzahl von Gegenständen (P).

7. Verfahren nach einem der vorhergehenden Ansprüche,
ferner umfassend ein Zuweisen einer Priorisierungsreihenfolge zu den charakteristischen Strukturen des Metamodells, wobei das Durchsuchen der Punktewolke nach den charakteristischen Strukturen des Metamodells gemäß der Priorisierungsreihenfolge durchgeführt wird.

8. Verfahren nach einem der vorhergehenden Ansprüche,
wobei das Durchsuchen der Punktewolke nach den charakteristischen Strukturen des Metamodells ein Unterteilen der Punktewolke in eine Mehrzahl von Clustern umfasst.

9. Verfahren nach einem der vorhergehenden Ansprüche,
wobei für das Auffinden der charakteristischen Strukturen in der Punktwolke und/oder Ableiten der tatsächlichen Position und Orientierung des vorbestimmten Gegenstands eine Mehrzahl von zu unterschiedlichen Zeiten erfassten Punktewolken betrachtet werden.

10. Verfahren zum Durchführen einer Anfahrt zu einem aufzunehmenden vorbestimmten Gegenstand (P) durch ein Flurförderzeug (100), umfassend:
- Definieren einer erwarteten Position und Orientierung des Gegenstands (S2);
- Anfahren an die erwartete Position des Gegenstands (P) gemäß einer vorbestimmten Bahnkurve (S3); und
- ein Durchführen eines Verfahrens zum Erfassen einer Position und Orientierung des vorbestimmten Gegenstands (P) nach einem der vorhergehenden Ansprüche (S1, S4-S7),
wobei das Erfassen der Umgebung des Flurförderzeugs (S4), das Erstellen der Punktwolke (S5), das Durchsuchen der Punktewolke nach den charakteristischen Strukturen des Metamodells (S6) und das Ableiten der tatsächlichen Position und der Orientierung des vorbestimmten Gegenstands (S6) während des Befahrens der vorbestimmten Bahnkurve durchgeführt werden,
wobei bei erfolgtem Ableiten der tatsächlichen Position und Orientierung des Gegenstands (P) die weitere Anfahrt zu dem Gegenstand (P) auf Grundlage der tatsächlichen Position und Orientierung durchgeführt wird.

11. Verfahren nach dem vorhergehenden Anspruch,
wobei eine iterative Erfassung der tatsächlichen Position und Orientierung des aufzunehmenden Gegenstands (P) während der weiteren Anfahrt und ggf. eine entsprechende Anpassung der weiteren Anfahrt durchgeführt wird.

12. Verfahren nach einem der Ansprüche 10 und 11,
wobei das Durchsuchen der Punktewolke nach den charakteristischen Strukturen des Metamodells und das Ableiten der tatsächlichen Position und der Orientierung des vorbestimmten Gegenstands (P) während des Anfahrens an die erwartete Position erst begonnen wird, wenn ein vorbestimmter Abstand zu der erwarteten Position unterschritten wird.

13. Flurförderzeug (100), umfassend wenigstens eine 2D-Bildaufnahmevorrichtung (108) und eine mit der Bildaufnahmevorrichtung (108) betriebsmäßig gekoppelte Steuereinheit (110) mit einer zugeordneten Speichereinheit, wobei die wenigstens eine Bildaufnahmevorrichtung (108) und die Steuereinheit (110) dazu eingerichtet sind, gemeinschaftlich ein Verfahren nach einem der vorhergehenden Ansprüche durchzuführen.

14. Flurförderzeug (100) nach dem vorhergehenden Anspruch,
wobei die wenigstens eine Bildaufnahmevorrichtung (108) durch einen 2D-Lidarsensor gebildet ist.

15. Flurförderzeug (100) nach dem vorhergehenden Anspruch,
wobei wenigstens zwei 2D-Lidarsensoren (108) vorgesehen sind, welche gemeinsam die Umgebung des Flurförderzeugs im Wesentlichen über vollständige 360° abdecken und deren gelieferte Daten mittels einer Sensorfusion miteinander kombiniert werden.
